# EUROPEAN PATENT APPLICATION

(11) **EP 4 138 013 A1**
(43) Date of publication of application: **22.02.2023**
(21) Application number: 22191018.5
(22) Date of filing: 18.08.2022
(51) Int. Cl.: G06Q 10/10, G06Q 30/06

(54) **METHOD AND APPARATUS FOR THE PROPAGATION OF PERSONAL DATA OF A USER BETWEEN A PLURALITY OF SERVICE PROVIDERS**

(30) Priority: 19.08.2021 IT 202100022067
(71) Applicant: CHERRYCHAIN SRL, 38057 Pergine Valsugana (TN) (IT)
(72) Inventor: RIZZI, Carlo, TRENTO (IT)
(74) Representative: Muraro, Alfeo Federico

(57) **Abstract**

Computer-implemented method (100) for the propagation of personal data (11, 11') of a user (5, 6, 7) between service providers (8, 9, 10), the method (100) comprising: storing (102) the personal data (11, 11') in a database (3) selectively accessible by the service providers (8, 9, 10) on a network (4) through a system of permissions; generating (103) and storing (104) in the database (3) a group of metadata (12, 12'), univocally associated to each personal data (11, 11') and comprising a first indicator (13) representative of a type (18) of the corresponding personal datum (11, 11') and a second indicator (14) representative of the procedures used for acquiring and verifying the personal datum (11, 11'); receiving (105) from the user (5, 6, 7) a consent (15) for granting access to a personal datum (11, 11') to a first service provider (8, 9, 10); receiving (106) from the first service provider (8, 9, 10) a request for availability (16) of the personal datum (11, 11'), comprising selection criteria (17); selecting (107) the groups of metadata (12a) that fulfil the selection criteria (17), and presenting (108) the first service provider (8, 9, 10) with information (12c) relating to each selected group of metadata (12a); receiving (109) from the first service provider (8, 9, 10) a confirmation of acceptance (19) of one of the selected groups of metadata (12a); providing (110) the first service provider (8, 9, 10) with a permission to access to the stored personal datum (11, 11') corresponding to the accepted group of metadata (12b).

## Description

### FIELD OF APPLICATION

The present invention is generally applicable to the technical field of systems for sharing data. In particular, the invention has as its object a method for the propagation of a user's personal data between a plurality of service providers, as well as a system using such method.

### STATE OF THE ART

As it is known, the provision of certain services occurs through the opening of a formal relationship between the user requesting the service and the provider of the service.

Among the above mentioned service providers are comprised, as a non exhaustive list, banks, financial services, utilities (electric energy, telephone, radio and television), insurance companies, public administrations, public and private institutions and agencies, mass-retail operators as regards, for example, enjoying some particular options offered to the customers, and so on.

The opening of the above mentioned relationship requires that the user submits some of his personal data to the service provider. Depending on the requested services, the personal data that are needed may comprise, as a non exhaustive list, personal details, addresses, such as residence, domicile, and professional ones, contacts, for example phone number and electronic mail address, banking and financial data, data useful for opening a user account, such as, for example, point of delivery (POD), the existence of certain requirements, and any other data that is useful at least for achieving the purpose of the relationship.

Often, for legislative, regulatory, or statutory reasons, the service provider has the need, or the duty, to verify the veracity (truthfulness) of the collected data, by asking the user to provide proofs, such as, exhibiting documents like the identity card, passport, driving license, social security card, certificates, and any other documents that is considered useful to support the declared data.

In other cases, for example for services that are supplied remotely ("online"), the service provider has the duty to verify, by means of different procedures, the contact data supplied by the user that are needed for providing the service, typically, the telephone number and the electronic mail address. That verification may occur by sending to the user, at the specified contact, a one-time authentication code ("one-time password", OTP), that the user remotely inserts in the request form as a proof of receipt.

The above mentioned verification of veracity may occur according to different levels of diligence, based on the laws and regulations that the service provider chooses or, more often, is obliged, to apply, related to the criticality of the requested service and to the legal consequences deriving from declaring wrong data. Hence, for example, the data verification performed by a bank is, in general, stricter compared to that that is performed by an insurance company, or by the public administration, that in turn is stricter than that performed by a retailer.

Moreover, as the service providers progressively move to digital platforms, with the consequent possibility to remotely open a relationship, laws and regulations have been issued over time, to define corresponding modes for securely acquire data of a user in digital format, in addition to the traditional acquisition in paper. Among the above mentioned regulations there is, for example, the European regulation elDAS (electronic Identification, Authentication and Thrust Services), the US regulation developed by NIST (National Institute of Standards and Technology), and so on. The data acquisition in digital format has several advantages in terms of speed for acquiring, storing, verifying, accessing, and updating data, both for the user and for the service provider.

In any case, all the above mentioned activities for acquiring the data must be performed each time a user opens a new relationship with a new service provider, with the drawback of generating a substantial loss of time and resources by both parties.

The above mentioned drawback is further worsen by the fact that each service provider has to implement all the relevant verification procedures.

The above mentioned drawbacks occur also, and more substantially, when already collected personal data are subsequently modified, for example because the user changes his domicile, or because he modifies one or more of his contacts. Actually, each service provider has the burden to perform a verification of the modified data.

Moreover, the user often omits to communicate to one or more service providers the above change, possibly rendering it difficult to execute the relationship. That is particularly serious if the change concerns the user's contacts, because the omitted updating could result in the impossibility to contact the user, or if the change concerns the data that are needed to identify the user, that, if not updated, could prevent the enjoyment of the rights deriving from the established relationship.

A further drawback derives from the risk of errors in the collection of data, or in their verification, that increases as the number of service providers involved increases.

### PRESENTATION OF THE INVENTION

The present invention aims at overcoming at least in part the above mentioned drawbacks of the prior art.

In particular, it is an aim of the invention providing a method to allow reducing the burden related to acquisition of user's personal data by the service provider with whom the user plans to open a relationship.

Moreover, it is an aim of the invention to ensure privacy of data, both during their acquisition, and during their subsequent changes.

Another aim of the invention is to reduce the burden related with the verification of veracity of acquired personal data.

It is also an aim of the invention to simplify subsequent changes in the personal data.

Moreover, it is an aim of the invention to limit errors and inconsistencies in the acquired data.

The above mentioned aims are achieved by a computer-implemented method for the propagation of personal data, as well as of documents, between a plurality of service providers, according to the main claim.

The above mentioned aims are also achieved by a computer-implemented method for opening a relationship between a user and a service provider, the method using the above mentioned method for the propagation of personal data, according to claim 11.

The above mentioned aims are also achieved by an apparatus for the propagation of a user's personal data between a plurality of service providers, the apparatus using the above mentioned method for propagation of personal data, according to claim 12.

Further detail features of the invention are specified in the corresponding dependent claims.

Advantageously, the invention allows to limit the time needed for the acquisition and modification of the data, both by the user, and by the service provider.

Still advantageously, the invention allows to reduce the resources that are needed by the service providers to perform the activities of acquisition and verification of the collected data.

The above mentioned aims and advantages, together with others hereinafter mentioned, will appear more clearly in the following disclosure of some preferred embodiments of the invention, that are illustrated, for indicative and non limiting purpose, with the help of the attached drawings.

### BRIEF DESCRIPTION OF THE DRAWINGS

Fig. 1 shows the apparatus of the invention, in schematic view.
Fig. 2 shows a detail of the apparatus of the invention.
Figs. 3 and 4 show a flowchart of the method of the invention.

### DETAILED DISCLOSURE OF SOME EXEMPLARY PREFERRED EMBODIMENTS

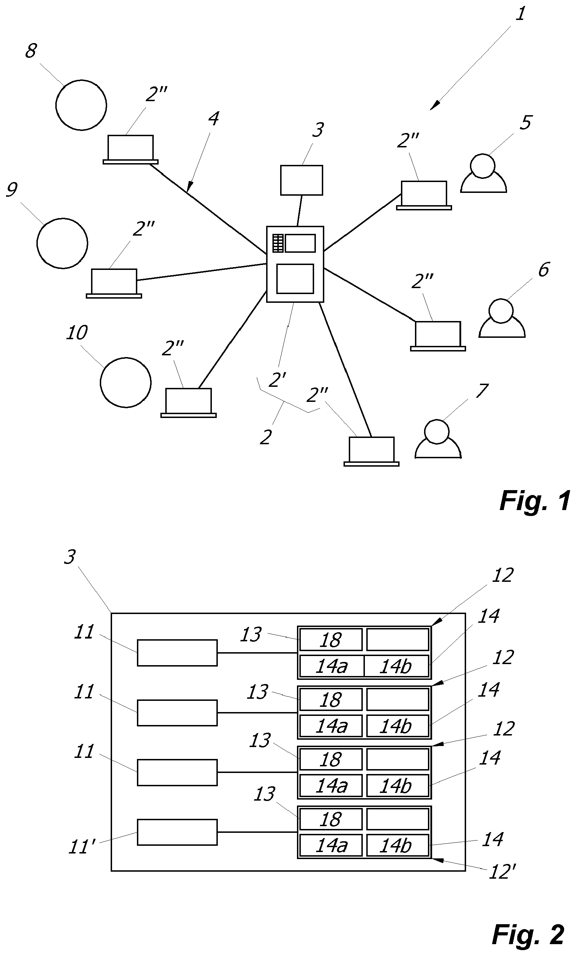

The method of the invention is disclosed in the use on an apparatus that is indicated in Fig. 1 in the overall with **1.**

The apparatus **1** comprises a network **4** for the exchange of data, the network being accessible to a plurality of users **5, 6, 7** and to a plurality of service providers **8, 9, 10** through a predefined protocol.

Generally, the users **5, 6, 7** are natural persons. Nevertheless, the users may be entities of any other kind that enjoy, or intend to open, a relationship with one of the above mentioned service providers **8, 9, 10.**

Each service provider **8, 9, 10** is any entity capable of supplying any kind of service to the users, for example banking, financial, insurance, documentary, certification, commercial, for the supply of goods and services, and so on.

As a non exhaustive purpose, a service provider may be a bank, a financial service company, a utility for providing services such as energy, telephone, radio and television broadcasting, or other, an insurance company, the public administration, public or private institutions and agencies, mass-retail operators, and so on.

For the sake of simplicity, the present description and the drawings make reference to three users **5, 6, 7,** who have different relationships with three providers **8, 9, 10.**

Nevertheless, it is clear that the invention is applicable to any number of users and providers, who may be interlinked in several ways by mutual economic relationships: in particular, any user may have an active relationship with several providers at the same time, any provider may have active relationships with several users at the same time, and/or one or more providers or users may have no active relationship with any other party, for example because they are willing to activate one, and/or because the previous relationships have ceased.

As regards the network **4,** it may comprise any system for exchanging data, for example through cable or over the air. Moreover, the network **4** may be a local network, limited to the participants using the method of the invention, and specifically used to perform the method of the invention, or it may be used also for other purposes. As an alternative, the network **4** may be a portion of a wider network, used by other non-participating entities, such as for example the Internet. What is disclosed hereinafter is applicable to a network **4** of any kind.

For the sake of simplicity, the term "participant" will be used hereinafter to generally identify any one of the users **5,** 6, **7** or of the service providers **8, 9, 10** that are connected to the network **4,** while the term "entity" will identify more generally anyone that, potentially, may interact with the network **4,** even if he is not a participant.

The network **4** comprises a database **3,** schematically represented in Fig. 2, to store the personal data **11** submitted by users **5, 6, 7** to the service providers **8, 9, 10** with whom the users have relationships.

As previously mentioned, the personal data **11** may comprise data of several types **18** such as, for example: personal details; residence, domicile, professional addresses; contacts, such as telephone number, electronic mail address, certified electronic mail address; banking data, such as current account number; financial data; points of delivery (POD), or other data that are useful for opening user accounts; data on the existence of certain requirements; identification numbers of documents, such as identity card, passport, social security card; etcetera.

The personal data **11** may also comprise copies of user's documents, for example images or scans of paper documents, or information and IDs relating to digital documents.

Preferably, the database **3** is, in its whole or in part, distributed in several nodes, i.e., memory supports that are physically distinct from each other and that are made accessible through the network **4.** Each memory support may be located at a corresponding service provider **8, 9, 10.** In that case, each service provider physically holds the personal data **11** in its own memory support, which corresponds to a portion of the database **3.**

In a variant embodiment, the database **3** may be centralized in its whole or in part, for example it may be located at a remote server ("cloud") that is made accessible through the network **4.**

For the sake of simplicity, the figures show a centralized database **3,** but the specific form of the database is irrelevant for the purpose of the invention.

The database **3** is made selectively accessible to the service providers **8, 9, 10** through a system of permissions for accessing each personal datum **11** exclusively to the service providers that have the permission, because they originally collected the personal datum directly by a user **5, 6, 7** during the opening of a relationship, or because they acquire such permission through the steps that will be disclosed in the following.

As regards the protocol for exchanging data on the network **4,** it is preferably configured to ensure safety of the data that are exchanged, in order to prevent unauthorized access, as well as to ensure data integrity, in order to avoid loss, damage, and/or tampering, of data. The above mentioned protocol may be based, for example, on a "distributed ledger technology" (DLT), and/or it may comprise algorithms for encoding, indexing, etcetera.

The network **4** further comprises a data processing system **2.** The data processing system **2** may be any data processing unit, or an assembly of such processing units **2', 2",** that can be configured to implement the above mentioned protocol. Each one of the above mentioned processing units may be, for example, a personal computer (PC), a workstation, a laptop, a tablet, a smartphone, and they are configured by installing a specific application, namely an executable code, which implements the above mentioned protocol.

In the figures, the network **4** is shown as a set of connections between a main data processing unit **2'** and several secondary data processing units **2"** available to the different participants.

The configuration just disclosed is presented merely for exemplary purpose. The network **4** may also be configured so that all data processing units **2', 2"** are mutually interconnected, in a sort of "web". In any case, it is the application and the corresponding protocol that deal with the routing of the communications between the different participants.

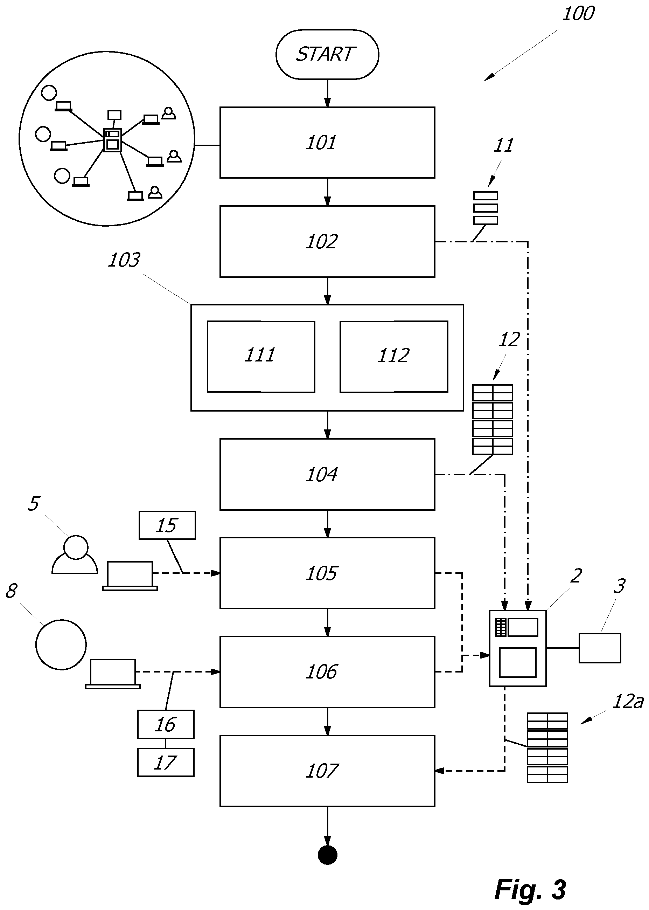

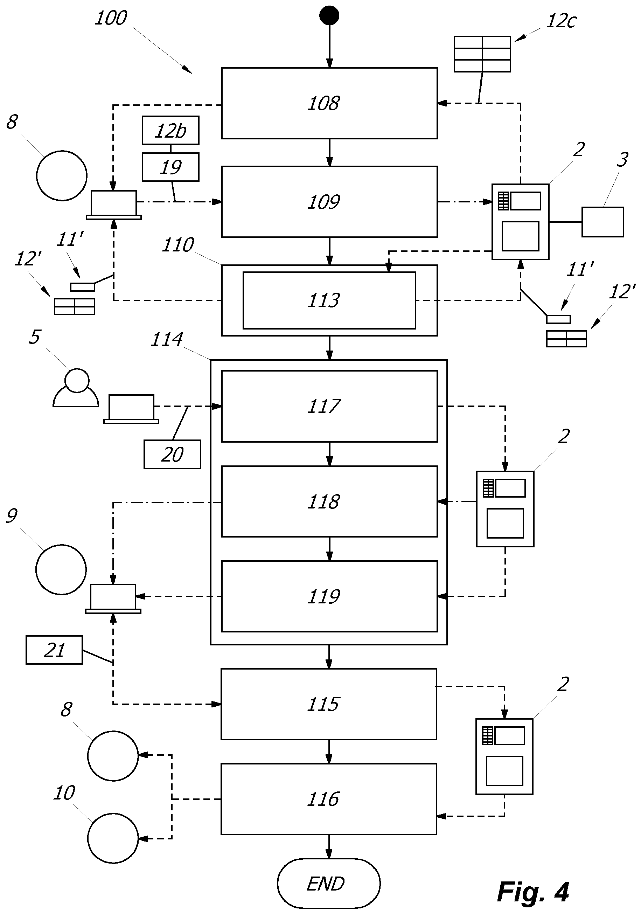

The data processing system **2** is configured to perform the steps that will be disclosed hereinafter, belonging to the method of the invention to manage the propagation of the personal data **11** of the users **5, 6, 7** between the service providers **8, 9, 10,** the method being referred to in Figs. 3 and 4, in overall, as **100.**

It is hereby specified that, in the following, any specific step allegedly performed to the data processing system **2** may be physically performed by one or more of the above mentioned processing units **2', 2".**

First of all, the method **100** comprises a first step **101** for making the network 4 accessible to the users **5, 6, 7** and to the service providers **8, 9, 10** through the above mentioned predefined protocol.

The access of each participant to the network **4** may occur through any one of the above mentioned processing units **2",** previously configured through installing the above mentioned application. The latter application may be part of a digital contract ("smart contract").

It is hereby specified that, in the following, an action of a participant may indicate either an action manually performed by the participant himself by means of the above mentioned application, or an action automatically performed by the application itself without the direct intervention of the participant, provided certain conditions are met and as it will be disclosed in the following.

The method **100** comprises the further step **102** of storing the personal data **11** of the users **5, 6, 7** in the database **3.**

The method **100** further comprises a step **103** for generating a group of metadata **12** univocally associated to each stored personal datum **11,** and a step **104** for storing the group of metadata **12** in the database **3.**

The above mentioned wording "group of metadata" generally means any set of data that is defined according to a preset scheme, and that contains information on a specific personal datum **11** that is independent on the content of the datum itself. In particular, each group of metadata **12** may contain information on the user to whom the personal datum is referred, on the type of the datum, on the service provider that acquired the datum, on service providers that have the permission to access the datum - and that, in general, correspond to the service providers that have acquired the datum, on the manner the datum was acquired by a service provider, on the date of acquisition of the datum, on the possible subsequent changes of the datum, and whatever.

The groups of metadata **12** may be spread into different, distinct portions of the database **3,** or may be grouped into a single table belonging to the database **3,** provided each group of metadata **12** is univocally associated to a personal datum **11** and to the corresponding user **5, 6, 7.**

In any case, the above mentioned groups of metadata **12** are directly accessible neither to the users **5, 6, 7,** nor to the service providers **8, 9, 10,** but only to the data processing system **2,** that can present to the service providers **8, 9, 10** with information **12c** contained in the groups of metadata **12** during performance of the method **100,** as it will be disclosed hereinafter.

In particular, and as it is shown in Fig. 2, each group of metadata **12** comprises a first indicator **13,** that is representative of the type **18** of the corresponding personal datum **11** among the different possible types, and a second indicator **14,** that is representative of the procedures through which the personal datum **11** was acquired and verified by the service provider that collected it. The second indicator **14** may comprise a plurality of elements representing different aspects of the procedure of acquisition of the corresponding personal datum.

Each element of the above mentioned indicators **13, 14** may be defined based on a corresponding table, or through an algorithm. For example, the first indicator **13** may be defined based on a table that univocally relates each type **18** of personal datum to a corresponding predefined numerical or alphanumerical datum.

Preferably, the step **103** of generating the group of metadata **12** comprises a step **111** of defining a first parameter **14a** belonging to the second indicator **14,** the value of the second indicator being representative of the level of verification of veracity made on the corresponding personal datum **11** by the service provider **8, 9, 10** who acquired it.

The above mentioned verification of veracity typically consists in executing a verification process that is codified in laws, regulations, statutes, or other procedures that are implemented by each service provider, in particular if the application of such verification process is a legal obligation. For example, in case the datum is a mobile phone number, the verification of its veracity may envisage sending, to the indicated phone number, an SMS containing a one-time code (OTP); in case the datum is a personal detail, the verification may envisage exhibiting a valid identity document; in case of an address of residence, the verification may envisage presenting a certificate of residence; etcetera.

In other words, the above mentioned level reflects the reliability of the verification process, that in turn is defined by the above mentioned procedures. As the above procedures often depend on the operational scope of the service provider, it follows that the first parameter **14a** depends, in general, on the kind of service provider.

Generally, among service providers, banking institutions are those who apply the strictest procedures for verifying the veracity of the collected data, since they are obliged to do that by law. Therefore, in general, that kind of service provider has the highest level. Insurance companies, public administration, and utilities, are located at intermediate level. Mass-retail operators are located at a lower level, since they are not bound by law as strictly as the above mentioned operators as regards the verification of the collected data, because they use the data mostly for issuing fidelity cards having the purpose to provide incentives to their customers, hence they are subjected mainly to obligations relating to the law on the protection of the personal data, for example the GDPR Regulation (General Data Protection Regulation), as well as to recommendations and good practices issued by institutions, agencies, or organizations for the protection of users.

It may happen that, for data belonging to several types **18,** different verification processes be envisaged, even for the same service provider. In that case, different values for the parameter **14a** could be assigned to the provider for different types of datum.

Preferably, the above mentioned step **103** of generating the group of metadata **12** comprises the step **112** of defining a second parameter **14b** belonging to the second indicator **14,** whose value is representative of the operating modes used by the service provider **8, 9, 10** to acquire the corresponding personal datum **11.**

The second parameter **14b** concerns a different aspect, that is in many ways independent on that relating to the first parameter **14a.** In fact, while the first parameter **14a** concerns the procedures for verifying the veracity of the collected personal datum, the second parameter **14b** specifically concerns the operating modes and the means used for the acquisition of the datum itself.

As previously mentioned, a first distinction relating to the above mentioned operating modes is about whether the datum is acquired in paper or digital form. A further distinction concerns the means used for acquisition of the datum, which, in the case of digital acquisition, may envisage the use of authentication devices, access keys, and so on. In the latter case, several reference procedures exist, such as eIDAS, NIST, and others. All of the above elements can be codified in the second parameter **14b,** and will be summarized hereinafter by the term "datum strength".

Advantageously, the above mentioned second parameter **14b** allows to qualify the personal datum **11** with a higher precision. In particular, the information on the strength of the personal datum **11** may be presented to the service provider requesting it, in order to offer the service provider a further element for selecting the datum that is more suited to it.

In variant embodiments of the invention, the second indicator **14** may comprise a plurality of second parameters **14b,** for example when the acquisition modes of the corresponding personal datum **11** fulfils several different reference procedures, or when they require acquisition of several elements of proof relating to the datum itself.

The method **100** comprises the further step **106** of receiving from a first service provider **8,** through the network **4,** a request for availability **16** of one or more personal data **11** of a specific user **5.** Generally, the above mentioned first service provider is a provider with whom the user intends to open a relationship and, in order to do that, needs to collect the personal data **11** because it does not possess the permission to access it already.

The request for availability **16** comprises, for each personal datum that is requested, one or more selection criteria **17** relating to the information stored in the groups of metadata **12.** In other words, the above mentioned selection criteria **17** establishes corresponding criteria used by the processing system **2** for executing a query among the groups of metadata **12.** In particular, the selection criteria **17** comprise the type **18** of each personal datum **11** that is requested.

Preferably, the selection criteria **17** also comprise a criterion relating to the second indicator **14.** That, advantageously, allows to classify the personal data **11** based on their mode of acquisition, and/or to exclude from the results of the query those data whose mode of acquisition is considered unsuitable by the first service provider **8.** The latter aspect is particularly advantageous if the possibility of automatic acceptance of the data is envisaged, as disclosed in the following.

Still preferably, the selection criteria **17** comprise one or more thresholds relating to the second indicator **14.** Advantageously, setting the above mentioned thresholds allows to define intervals, in order to allow a better focused search.

One of the above mentioned thresholds may be a minimum value for the second indicator **14,** below which the data are excluded from the search results. Advantageously, the above mentioned minimum threshold avoids presenting the first service provider **8** with data that it considers having such a quality below a minimum acceptable value.

Another one of the above mentioned thresholds may be a maximum value for the second indicator **14.** The above mentioned maximum threshold may be useful, for example, in user-profiling activities.

Other thresholds may concern other limits imposed on the values of one or more synthetic indicators, as disclosed later.

Still preferably, the selection criteria **17** comprise criteria that make reference to both parameters **14a** and **14b** of the second indicator **14,** with the advantage of allowing an even more precise classification of the results of the above mentioned request for availability **16.** The above mentioned criterion may comprise one or more of the above mentioned thresholds, for example a minimum threshold for discarding those data whose level of verification and strength are not considered acceptable by the provider requesting them.

Clearly, if the second indicator **14** comprises several second parameters **14b,** the selection criteria **17** may comprise one or more criteria, each relating to each one of those parameters.

Further selection criteria **17** may concern the date in which the datum was acquired, in order to being able to distinguish more recent data from less recent ones, other criteria being the same.

In response to the request for availability **16,** the method **100** comprises the step **107** of selecting the groups of metadata **12** referring to the personal data **11** of user **5** and which fulfil one or more of the selection criteria **17,** for example those corresponding to a personal data **11** of a given type **18.**

Following the above mentioned selection, and as shown in Fig. 4, a step **108** is performed in which, for each selected group of metadata **12a** that was identified in the previous step, the first service provider **8** is presented, through the network **4,** with information **12c** useful to the first service provider to identify the data most suitable for its aims.

Preferably, the above mentioned information **12c** comprise at least those ones that are related to the selection criteria **17.**

The above mentioned information **12c** may comprise, for each selected group of metadata **12a,** a first synthetic indicator, calculated on the basis of a predefined algorithm, that conventionally expresses the level of consistency of the group of metadata **12** with the selection criteria **17,** with the possible addition of other synthetic indicators relating to the information of the group of metadata **12** that are not related with the selection criteria **17.**

The above mentioned presentation **108** may occur by means of a graphical interface provided by the application that is loaded on the processing unit **2', 2",** and that is configured to display the above mentioned information **12c.**

It is understood that the above mentioned step **108** does not involve any presentation of the personal data **11,** but only presentation of information **12c** about the corresponding groups of metadata **12.** Therefore, the first service provider **8, 9, 10** is informed of the fact that, in database **3,** personal data **11** of that particular user **5** are stored which fulfil one or more search criteria **17,** in particular of the type **18** that is searched for, yet without presenting it with the personal data, that remain inaccessible.

At the same time, the first service provider **8** does not get information about other service providers **9, 10** having the availability of the requested data, hence it does not know the relationships of the user **5** with those other service providers.

Therefore, it is understood that the aim of ensuring the privacy of both the personal data **11** of user **5,** and the information on service providers **9, 10** that are possibly related to him, is achieved.

Moreover, since the personal datum **11** is transferred digitally to the first provider **8,** the risk of acquisition errors is limited.

Moreover, since the personal data **11** are qualified through the groups of metadata **12,** the invention is particularly suited to be used on a pre-existing database **3** of a distributed kind, where the personal data **11** are physically stored by different service providers that, generally, use different standards for managing the data. In fact, using the groups of metadata **12** avoid the need for using integrated or federated systems for data sharing, whose implementation require a remarkable effort by the service providers.

The method **100** comprises the further step **109** of receiving from the first service provider **8,** through the network **4,** a confirmation of acceptance **19** of one of the groups of metadata **12b,** for each data type **18** that was requested.

The first service provider **8** may supply the above mentioned confirmation of acceptance **19** interactively through the application.

As an alternative, the application loaded on the processing unit **2"** available to the first service provider **8** may be configured in such a way as to automatically supply the confirmation of acceptance **19,** provided that predefined conditions are met. One of the above mentioned predefined conditions may be the existence of a group of metadata **12,** among those that were presented, which fulfils all the selection criteria **17,** in which case the confirmation of acceptance **19** is supplied for the latter group of metadata **12.** When a same datum is repeated several times, because it was acquired by several service providers **9, 10,** and the corresponding groups of metadata **12** fulfil all selection criteria **17,** the application may calculate, through a predefined algorithm, a quality index for each group of metadata **12,** and supply the confirmation of acceptance **19** for the group that present the highest quality index.

The above mentioned quality index may be defined, for example, based on the modes through which the personal datum **11** was acquired, as will be clarified in the following.

The method **100** further comprises the step **105** of receiving by the user **5,** through the network **4,** a consent **15** to grant the first service provider **8** access to the personal data **11** that it requested.

As a response to the confirmation of acceptance **19** and to the consent **15,** the further step **110** is envisaged for providing the first service provider **8,** through the network **4,** with the permission to access the stored personal data **11** corresponding to the group of metadata **12b** that the first service provider confirmed to accept.

It is understood that the above disclosed method allows the service provider to directly acquire the personal data of the user without the user having to submit them again, and without the service provider having to digitalise them. In fact, if data are already available in the database **3,** they are simply transferred through the network **4** to the provider who requests them, upon acquisition of the user's consent. Therefore, the aim is achieved of reducing the burden related to the acquisition of the personal data **11,** both for the user and for the service provider.

Moreover, the above mentioned steps may be fully remotely accomplished through network 4, in order to further reduce the burden for the operators.

Advantageously, reducing the burden for the service providers implies reducing the resources to be used for acquiring the data, hence reducing the corresponding costs.

Moreover, since the groups of metadata **12** also comprise a second indicator **14** relating to the modes of acquisition of the corresponding personal datum, the first service provider **8** has the option of to acquire, among the available personal data **11,** the one that implies the mode of acquisition most suitable to the provider's requirements, in order to limit further verification activities that the provider should accomplish on the datum, hence achieving a further aim of the invention.

Preferably, the presentation to the first service provider **8** with information **12c** relating to the selected groups of metadata **12a** comprises the step of presenting the first service provider **8** with a notification of partial inadequacy **22** relating to each selected group of metadata **12a** that fulfils the selection criteria **17** only in part. Advantageously, the step **108** just disclosed allows a more easily selection of the most suitable datum by the first service provider **8,** since it allows to inform the provider that a personal datum **11** does not completely fulfil the acceptability criteria defined by the first provider and, hence, needs further verification operations by the provider itself.

As regards the above mentioned step **110** of granting the first service provider **8** the permission to access the personal datum **11** corresponding to the accepted group of metadata **12,** preferably it comprises the further step **113** of creating a duplicate **12'** of the accepted group of metadata **12b** and a duplicate **11'** of the corresponding personal datum **11,** both of which are stored in the database 3 and rendered accessible to the first service provider **8, 9, 10.**

Advantageously, thanks to the duplication of the group of metadata **12** and of the personal datum **11,** the duplicates are independent of the original data. That is particularly advantageous when the first provider **8, 9, 10** needs to perform further operations to verify the acquired personal datum, that could result in a modification of the corresponding group of metadata. In fact, the presence of the above mentioned duplicates allows to modify the group of metadata **12'** without affecting the original one **12b.**

In this respect, the method **100** preferably comprises also a step **114** for updating the first parameter **14a** of the duplicate group of metadata **12'** following a verification of veracity accomplished by the first service provider **8, 9, 10** on the corresponding personal datum **11'.** The update **114** is made if the level of the above mentioned verification of veracity is higher than the one corresponding to the previous value of the first parameter **14a,** that is, the one relating to the original group of metadata **12.**

The duplication of the personal data **11** also allows to perform a verification of consistency of the information stored in the database **3.** More specifically, it is possible to define a consistency index indicating possible discrepancies between different personal data **11** of the same user and of the same type held by corresponding different service providers, in order to undertake corrective actions that may comprise, for example, a request to the user to confirm the correct data.

The above mentioned verification of consistency allows to limit the propagation of erroneous personal data **11.**

As regards the subsequent changes to the personal data **11,** they preferably occur as follows.

Firstly, in a step **115,** a notification that a change has occurred **21** to a personal datum **11** of a user **5, 6, 7** is received, through the network **4,** from a service provider having access to it, for example the second service provider **9.**

Later, in a step **116,** the above mentioned notification that a change has occurred **21** is sent to the other service providers **8, 10** that has access to a personal datum **11** of the same user **5, 6, 7** and of the same type **18** of the personal datum **11** that changed.

Advantageously, the steps just disclosed allow to inform all service providers having access to the personal datum of the type at issue that a change has occurred, thus allowing them to act accordingly. For example, if a service provider **9** changes the datum relating to the residence address of a user **5, 6, 7,** the service providers having the permission to access to the residence address of the same user are informed of the change. As a consequence, each service provider may accept the change, and/or proceed with further verifications of the datum that has changed. For example, the latter event occurs when the acquisition and verification process, as indicated by the second indicator **14,** that was implemented by the second service provider **9** which made the change, is considered not satisfactory by one or more of the other service providers.

The steps just disclosed further limit the propagation of erroneous personal data.

It is noted that, even in the just mentioned occurrence of a change in the data, the other service providers are informed of the change and of the kind of acquisition and verification process that was performed, yet without knowing which service provider actually performed the acquisition, to advantage of the privacy of the information.

Preferably, the change of a personal datum **11** is made upon request by the user to whom the datum is referred, for example user **5.**

To that end, the above mentioned step **115** of receiving the notice that a change has occurred **21** is preceded by a step **117** of receiving from the user **5,** through the network **4,** a request for a change **20** of the personal datum **11,** after which a step **118** is made for selecting the above mentioned second service provider **9** among those having access to a personal datum **11** of user **5** having the same type **18** of the personal datum **11** of which the update is requested, and a step **119** for forwarding, through the network **4,** the above mentioned request for a change **20** to the second service provider **9.**

Advantageously, the procedure just disclosed allows selecting the service provider that is most suited for managing the change to the personal datum **11,** with particular regard to the aspect of the verification of veracity.

For example, the second service provider **9** may be selected as the one that offers the highest level of verification of veracity for that specific type of personal datum among the service providers having access to that datum. As a consequence, advantageously, it will be possible to propagate the changed datum to the other service providers without the need for them to perform any further verification on the datum itself, because the verification was already performed by the second service provider in a way that is satisfactory for all of them.

It is noted that the second service provider **9** needs not be the one that offers the highest level of verification in general, but rather the one that offers the highest level for that specific type of datum. As a consequence, the change of a relatively less important personal datum, for which a low-level verification is enough, may be entrusted to a service provider that generally applies a lower level, in order to distribute the verification efforts between the service providers participating in the network 4, hence avoiding to use excessive resources for verifying less important data.

As previously mentioned, the above mentioned method **100** and the corresponding apparatus **1** are particularly suited to be used in the process of opening of a relationship between a user **5** and a first service provider **8,** wherein, in the opening the relationship, the first provider needs to acquire one or more personal data **11** of the user. Through the method **100,** the first provider can acquire the above mentioned personal data from one or more of the other service providers **9, 10** for which that data is available, by virtue of the fact that the same user has already activated relationships with them.

Operatively, when a user **5, 6, 7** intends to open a new relationship with a service provider **8, 9, 10,** but one or more of his personal data **11** that are requested by the service provider are not present in the database **3,** he submits the data to the provider, together with a consent to treating them, in accordance with the enforceable laws about the privacy of the information. The personal data may be submitted either in person, when the user appears at an office of the service provider **8, 9, 10,** or remotely, when the user sends the data through a data exchange system, for example the Internet network, an electronic mail service, and so on.

In both instances, the service provider **8, 9, 10** verifies the veracity of the personal data **11** according to the procedure applicable to that case. The above mentioned procedure may envisage showing personal records, certifications, or any other documents, either in original or in duplicate, in either paper or digital format.

Based on the acquisition and verification procedure used, the data processing system **2** defines the group of metadata **12** and stores it in the database **3,** together with the personal data **11.** From this moment, the user's personal data **11** can be propagated to other service providers **8, 9, 10** participating in the network **4** with which the user intends to open a relationship, according to the above disclosed method **100.**

From the above, it is understood that the method and the apparatus of the invention achieve the preset aims.

In particular, the possibility to use personal data already stored in the network allows reducing the burden related to their subsequent acquisition, both for the user and for the service providers.

Moreover, the possibility of digitally transferring, to the requesting provider, personal data already acquired, prevents the risk of errors.

Moreover, since the group of metadata comprise information relating to the procedures used to verify the veracity of the corresponding data by the provider which acquired them, allows to reduce the burden related to the verification of the personal data by other service providers that subsequently request them. In fact, the group of metadata certifies the authoritativeness with which the former provider originally acquired the data, thus avoiding that the need for the latter providers to repeat the verification procedure.

The same method of propagation of the personal data may be used also for propagating subsequent changes thereof.

Furthermore, linking each personal datum to a corresponding group of metadata ensures the privacy of the information, both during its acquisition, and during its subsequent changes, since it allows to present the providers with information representing the quality of data stored in the database, yet without disclosing neither the data, nor the service provider that has the availability thereof.

The invention is susceptible of changes and variants, all encompassed in the inventive concept expressed in the attached claims. In particular, the elements of the invention may be replaced by other elements technically equivalent thereof.

Moreover, one or more elements of a specific embodiment of the invention that are technically compatible with another specific embodiment of the invention may be introduced in the latter in addition to, or in replacement of, elements of the latter.

Where technical elements specified in the claims are followed by reference signs, those reference signs are included merely for improving the understanding of the invention, hence they do not imply any limitation to the claimed scope of protection.

## Claims

1. Computer-implemented method (100) for the propagation of personal data (11, 11') of a user (5, 6, 7) between a plurality of service providers (8, 9, 10), the method (100) comprising:
- setting (101) a network (4) for data exchange, accessible to said user (5, 6, 7) and to said plurality of service providers (8, 9, 10) through a predefined protocol;
- storing (102) said personal data (11, 11') in a database (3) belonging to said network (4) and selectively accessible by said service providers (8, 9, 10) through a system of permissions;
- generating (103) and storing (104) in said database (3) a group of metadata (12, 12'), univocally associated to each one of said stored personal data (11, 11') and comprising a first indicator (13) representative of a type (18) of the corresponding personal datum (11, 11') among different possible types and a second indicator (14) representative of the procedures used for acquiring and verifying said personal datum (11, 11');
- receiving (105) from said user (5, 6, 7), through said network (4), a consent (15) for granting access to at least one of said personal data (11, 11') to a first one of said service providers (8, 9, 10) lacking the corresponding permission;
- receiving (106) from said first service provider (8, 9, 10), through said network (4), a request for availability (16) of said at least one of said personal data (11, 11'), said request for availability (16) comprising one or more selection criteria (17) relating to said groups of metadata (12, 12'), said selection criteria (17) comprising at least the type (18) of said requested personal datum (11, 11');
- in response to said request for availability (16), selecting (107) one or more of said groups of metadata (12a) that fulfils at least one of said selection criteria (17), and presenting (108) to said first service provider (8, 9, 10), through said network (4), with information (12c) relating to each one of said selected groups of metadata (12a);
- receiving (109) from said first service provider (8, 9, 10), through said network (4), a confirmation of acceptance (19) of one of said selected groups of metadata (12a);
- in response to said confirmation of acceptance (19) and to said consent (15), providing (110) to said first service provider (8, 9, 10), through said network (4), a permission to access to the stored personal datum (11, 11') corresponding to the accepted group of metadata (12b).

2. Method (100) according to claim 1, **characterized in that** said step (103) of generating said group of metadata (12, 12') comprises the step (111) of defining a first parameter (14a) belonging to said second indicator (14), representative of a level of verification of veracity performed on the corresponding personal datum (11, 11') by the service provider (8, 9, 10) that acquired it.

3. Method (100) according to any claim 1 or 2, **characterized in that** said step (103) of generating said group of metadata (12, 12') comprises the step (112) of defining a second parameter (14b) belonging to said second indicator (14), representative of the operating mode used to acquire the corresponding personal datum (11, 11') by the service provider (8, 9, 10) that acquired it.

4. Method (100) according to any claim from 1 to 3, **characterized in that** said step (110) of providing a permission to said first service provider (8, 9, 10) comprises the step (113) of creating a duplicate (11', 12') of said accepted group of metadata (12b) and of the corresponding personal datum (11, 11'), storing them in said database (3) and rendering said duplicate (11') of said personal datum (11, 11') accessible to said first service provider (8, 9, 10).

5. Method (100) according to claim 4 when in combination with claim 2, **characterized in that** it comprises a step (114) of updating said first parameter (14a) of said duplicate group of metadata (12') following a verification of veracity performed on the corresponding personal datum (11, 11') by said first service provider (8, 9, 10) if said the level of said verification of veracity is higher than the level corresponding to the previous value of said first parameter (14a).

6. Method (100) according to any claim from 1 to 5, **characterized in that** it comprises the following further steps:
- receiving (115) from a second service provider (8, 9, 10), through said network (4), a notification that a change has occurred (21) on a personal datum (11, 11') that is accessible to said second service provider (8, 9, 10);
- sending (116) said notification that a change has occurred (21) to the other service providers (8, 9, 10) that have access to a personal datum (11, 11') of said user (5, 6, 7) of the same type (18) of the personal datum (11, 11') that was changed.

7. Method (100) according to claim 6, **characterized in that** it comprises, before said step of receiving (115) said notification that a change has occurred (21), the following further steps:
- receiving (117) from said user (5, 6, 7), through said network (4), a request (20) for a change of one of said personal data (11, 11');
- selecting (118) said second service provider (8, 9, 10) among those that have access to a personal datum (11, 11') of said user (5, 6, 7) of the same type (18) of the personal datum (11, 11') to be changed;
- forwarding (119), through said network (4), said request for a change (20) to said second service provider (8, 9, 10).

8. Method (100) according to any claim from 1 to 7, **characterized in that** said selection criteria (17) comprise at least a criterion relating to said second indicator (14).

9. Method (100) according to any claim from 1 to 8, **characterized in that** said step (108) of presenting said first service provider (8, 9, 10) with said information (12c) relating to each selected group of metadata (12a) comprises the step of presenting to said first service provider (8, 9, 10) a notification of partial inadequacy (22) relating to each selected group of metadata (12a) that fulfils only partially said selection criteria (17).

10. Method (100) according to any claim from 1 to 9, **characterized in that** said information (12c) comprise information on said second indicator (14).

11. Computer-implemented method (100) for establishing a relationship between a user (5, 6, 7) and a first service provider (8, 9, 10) comprising the step of acquiring, by said first service provider (8, 9, 10), personal data (11, 11') of said user (5, 6, 7) that are held by a plurality of other service providers (8, 9, 10) having access to said personal data (11, 11'), said acquisition occurring through a method (100) according to any claim from 1 to 10.

12. Apparatus (1) for the propagation of personal data (11, 11') of a user (5, 6, 7) between a plurality of service providers (8, 9, 10), comprising:
- a network (4) for data exchange, accessible to said user (5, 6, 7) and to said plurality of service providers (8, 9, 10) through a predefined protocol;
- a data processing system (2) belonging to said network (4);
- a database (3) belonging to said network (4);
said data processing system (2) being configured to execute a method (100) according to any claim from 1 to 11.
